# EUROPEAN PATENT APPLICATION

(11) **EP 3 173 340 A1**
(43) Date of publication of application: **31.05.2017**
(21) Application number: 15382593.0
(22) Date of filing: 30.11.2015
(51) Int. Cl.: B64D 39/06

(54) **SELF-ILLUMINATED COUPLING FOR AUTOMATIC AERIAL REFUELING**

(71) Applicant: Airbus Defence and Space SA, 28906 Getafe Madrid (ES)
(72) Inventor: ESPINOSA SÁNCHEZ, Martín, 28906 Getafe (ES)
(74) Representative: Elzaburu S.L.P.

(57) **Abstract**

Aerial refueling coupling (6) attached to a hose (11) of a tanker aircraft (10) comprising an inner conical surface (7) configured for receiving a probe (13) of a receiver aircraft (12), the aerial refueling coupling (6) comprising illumination means attached to the coupling (6) and configured for pointing to the inner conical surface (7) of the coupling (6) for illuminating said inner conical surface (7) as a target for a laser seeker locatable in the receiver aircraft to allow the guidance of the probe to contact the coupling (6).

## Description

### FIELD OF THE INVENTION

The present invention relates to a coupling, a system and a method that allows an automatic guidance and contact of a receiver aircraft (manned or unmanned) equipped with a refueling probe to a hose and drogue aerial refueling apparatus of a tanker aircraft.

### BACKGROUND OF THE INVENTION

Aerial refueling via the probe and drogue method is known. In an exemplary refueling scenario, a refueling drogue receptacle with coupling connected to a refueling hose is unreeled from a refueling aircraft or tanker aircraft towards a receiver aircraft, ie, an aircraft to be refueled.

The receiver aircraft has a refueling probe extending from the aircraft. The receiver aircraft maneuvers to the refueling drogue and inserts its refueling probe into the refueling drogue receptacle, at which point the refueling drogue receptacle "locks" onto the refueling probe and a transfer of fuel from the refueling aircraft to the receiver aircraft is conducted.

To contact on the coupling, the receiver has to hit within the coupling inner conical surface with its probe. Traditionally, for manned operations, a proper contact depended on the receiver pilot skill, without any guidance aid.

The increase of unmanned aerial vehicles is pushing to perform automatic aerial refueling in safe conditions and requires systems to allow automatic contacts between receiver probe and tanker aerial refueling couplings.

To do this, one approach under development to guide the receiver to the aerial refueling coupling is based on vision systems in the receiver which process images in order to track the coupling.

However, this development requires several cameras on the receiver pointing to the theoretical position of the refueling coupling, integrated to a high speed images processing system to calculate the coupling position. Additionally, the suitability of the cameras might be subjected to the visibility conditions.

Another known approach is having a laser receiver/transmitter on a target device towed by a host aircraft that projects a reticle pattern aft of the host aircraft and a laser receiver/transmitter on a probe of the receiver aircraft that is activated as the receiver aircraft is moved within the projected reticle pattern. Thereafter, a rangefinder guides the receiver towards the host aircraft until the laser transmitter/receiver of the receiver is aligned and boresighted with the laser transmitter/receiver of the host aircraft.

The disadvantage of this system is that it is based on a perfect alignment between probe and coupling. In legacy aerial refueling systems, the drogue can spin around its axis since its rotation is not blocked as this prevents from torsion in the hose. But the mentioned system needs to maintain the relative position in terms of rotation between receiver and coupling and in case of large hoses, for instance 90 ft., misalignments would be produced between receiver and coupling.

### SUMMARY OF THE INVENTION

The present invention overcomes the problem of achieving the contact between the aerial refueling coupling and the probe enabling a fully automatic hookup.

This invention is intended to provide the aerial refueling coupling with a system which allows the receiver guidance to the target to allow automatic contact for receivers guided by a laser seeker.

The invention is based on the use of standard components of aerial refueling practices, therefore not needing the use of special or adapted components.

To do this, the aerial refueling coupling is equipped with a system which "self-paints" or illuminates the coupling as a target for the laser seeker and for instance, with technologies of laser bounces detection and tracking, the receiver will be able to hit the coupling. The host coupling for this system might be a standard aerial refueling coupling (for example MA4 coupling) and, therefore, it could be installed on an existing tanker without further retrofits.

The aerial refueling coupling of the invention comprises illumination means attached to the coupling and configured for pointing to the inner conical surface of the coupling for illuminating said inner surface as a target for a laser seeker locatable in the receiver aircraft to allow the guidance of the probe to contact the coupling.

The laser seeker might be installed either on the receiver probe or on other receiver position with the appropriate calibration. The laser seeker might be based on the existing technology of ACLOS (Automatic Command Line of Sight).

The illumination means are kept pointing to the conical surface and the radiation bounces off said conical surface and is scattered in all directions. The probe is deployed near the target and when it is close enough for some of the reflected energy from the target to reach it, the laser seeker detects which direction this energy is coming from and adjusts its trajectory towards the source.

It is also an object of the present invention an aerial refueling system, comprising:
- a laser seeker located on a receiver aircraft (either on its probe or on another location), and
- a coupling arranged to be attached to the hose of the tanker aircraft.

As described above, the system is characterized in that the coupling comprises illumination means, for instance a laser illuminator, attached to the coupling and configured for pointing to the inner conical surface of the coupling for illuminating said inner surface as a target for a laser seeker locatable in the receiver aircraft, either on the probe or on other suitable location with the appropriate calibration, to allow the guidance of the probe to contact the coupling.

It would be also an object of the present invention an aerial refueling system comprising:
- a receiver aircraft comprising a laser seeker located on the receiver aircraft (either on its probe or on another location), and
- a tanker aircraft comprising a coupling arranged to be attached to the hose of the tanker aircraft.

As previously described, the system would be characterized in that the coupling comprises illumination means attached to the coupling and configured for pointing to the inner conical surface of the coupling for illuminating said inner surface as a target for the laser seeker located in the receiver aircraft to allow the guidance of the probe to contact the coupling.

Again, one of the advantages of the previous systems is that it can be fitted on standard systems as there are no restrictions in terms of rotation between receiver and coupling as disclosed in the background art.

It is also an object of this invention the tanker aircraft comprising an aerial refueling coupling according to the above technical features.

Finally, it is a further object of the invention a method for automatically guiding a probe to a coupling in a hose and drogue refueling operation, characterized in that it comprises the steps of:
- providing illumination means attached to the coupling,
- providing a laser seeker in the receiver, for instance, based on ACLOS, and
- pointing the illumination means to the inner conical surface of the coupling for illuminating said inner surface as a target for the laser seeker of the receiver aircraft to allow the guidance of the probe to contact the coupling.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1 shows a longitudinal cross-section of an embodiment of a coupling according to the invention.
Figure 2 discloses a block diagram according to the embodiment shown in Figure 1.

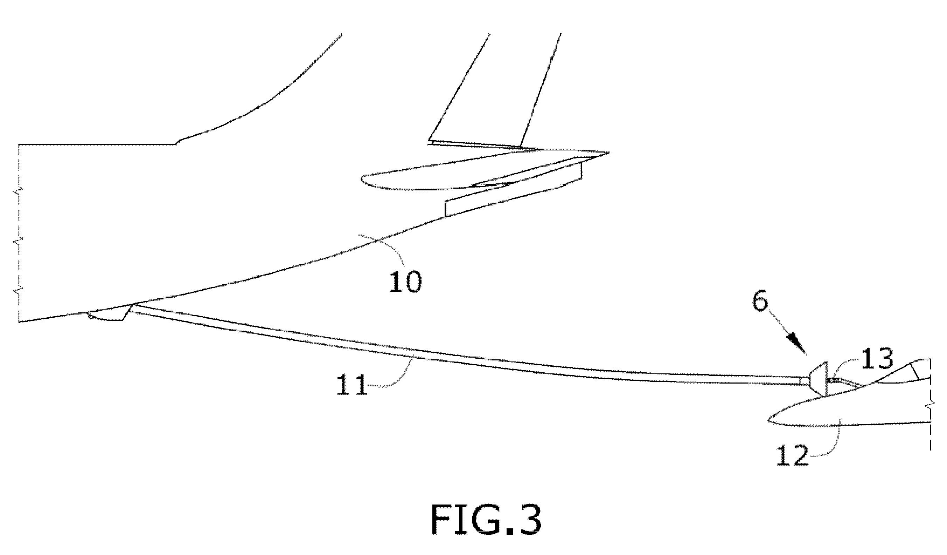

Figure 3 shows a side elevation schematic view showing aerial refueling between a receiver aircraft and a tanker aircraft.

### DETAILED DESCRIPTION OF THE INVENTION

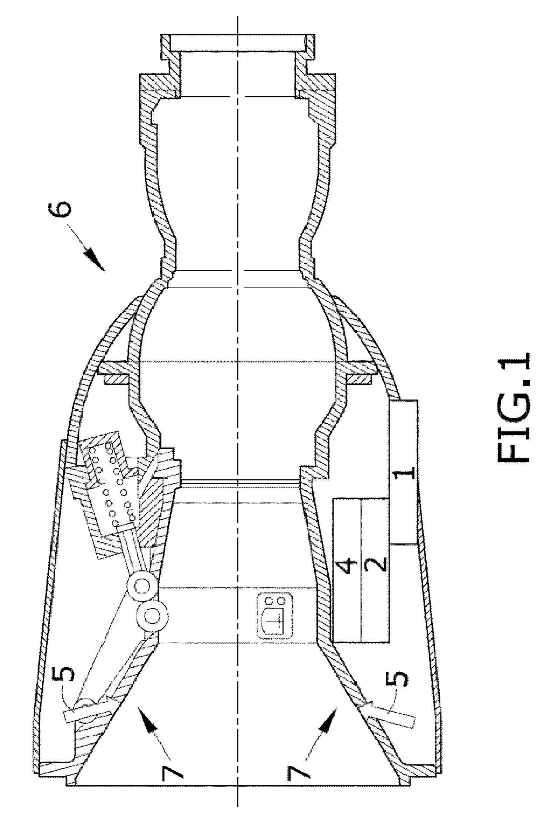

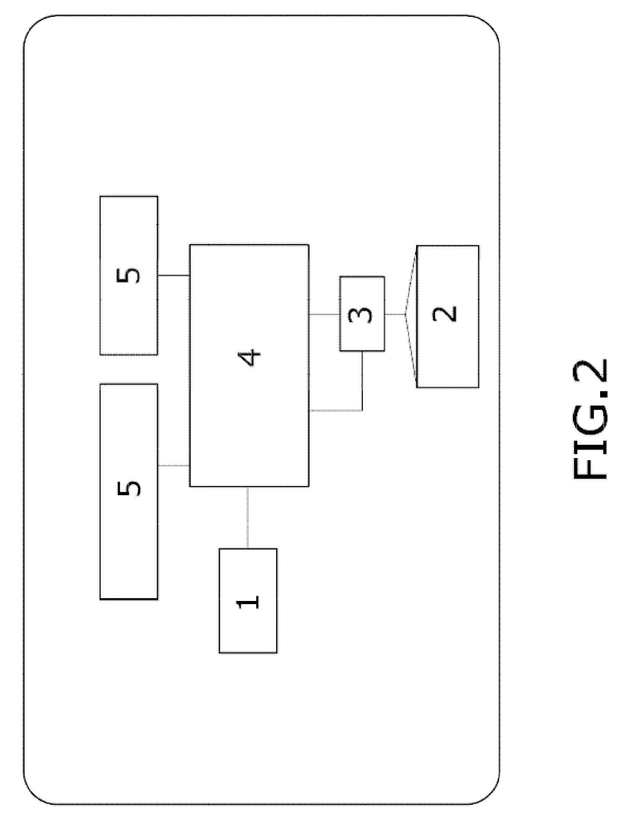

In the embodiment shown in Figures 1 and 2, the illuminator means are a laser illuminator (5). Specifically, the coupling (6) comprises a couple of laser illuminators (5), or could comprise several laser illuminators (5), which are pointing directly to the inner conical surface (7) of the coupling (6). The additional laser illuminator (5) provides redundancy to the system.

The center of the coupling (6) is the target which has to be illuminated as the reflection of the laser (5) will be better distributed if the center is pointed.

More specifically, the laser illuminators (5) are attached to the inner conical surface (7) of the coupling (6).

Depending on the aerial refueling coupling surface reflection, the inner conical surface (7) might require to comprise a highly reflecting surface located in the area in which the laser (5) impinges and/or additional laser illuminators (5) might be required.

The coupling (6) shown in the embodiment further comprises:
- A controller (4), more specifically a microcontroller, configured to be connected to the laser illuminator (5) for turning it on/off, therefore the laser illuminators (5) will be managed by the microcontroller (4), which will turn them on/off by supplying the required current.
- A power supply configured to be connected to the controller (4) for providing power to it (4).

In the disclosed embodiment, the power supply comprises an air turbine (1) located in the coupling (6). As the refueling coupling (6) is dragged through the atmosphere, the turbine automatically detects that the coupling (6) is flying as ram air turns the turbine (1) by the impinging air flow. Since the turbine (1) is connected to the controller (4), the turbine acts as a sensor to switch on the system. Additionally, it is adapted to provide the system with power, therefore power supply may be accomplished without the need of an external power source, thus greatly simplifying the refueling system. The power source of the disclosed embodiment comprises a battery (2) located inside the coupling (6). Thus, a refueling drogue assembly may be placed without the need for communication wires, etc., to run along the refueling hose.

Therefore, the power supply for the laser illuminators (5) is provided by autonomous means within the coupling (6) which allows to be fitted on a standard aerial refueling hose (11). In order to save energy and to switch off the "beacon effect" of the laser illuminator (5), the coupling (6) is able to activate the "self-illumination" system autonomously when it is deployed in the air and to deactivate it when the hose is stowed and does not require any control from the tanker (10).

As soon as the aerial refueling coupling (6) is deployed into the free air, the air turbine (1) starts spinning and activates the microcontroller (4) which is able to manage the system in terms of energy management and laser illuminator (5) activation / deactivation with the appropriate logic.

As mentioned above, if required, the coupling (6) further comprises a battery (2) configured to be connected to the controller (4) such that the electrical current will be provided by the air turbine (1) fitted to the coupling (6) and by the additional battery (2).

As previously stated, the laser seeker might be installed either on the receiver probe (13) or on other receiver position with the appropriate calibration, i.e., having a line of sight similar to the probe (13), the alternative locations depending, therefore, on the geometry of the receiver (12).

Additionally, the claimed system allows the receiver (12) to change its relative speed to the target from an "approach speed" until the pre-contact position to a "contact speed" basing on the energy of the reflected laser (5) beam. For this, the receiver (12) may comprise laser brightness sensors to adjust its approaching speed.

Finally, data link between the receiver (12) and the tanker (10) has to be provided to allow proper formation and in-contact flight between both.

## Claims

1. Aerial refueling coupling (6) arranged to be attached to a hose (11) of a tanker aircraft (10) comprising an inner conical surface (7) configured for receiving a probe (13) of a receiver aircraft (12) **characterized in that** the aerial refueling coupling (6) comprises illumination means attached to the coupling (6) and configured for pointing to the inner conical surface (7) of the coupling (6) for illuminating said inner conical surface (7) as a target for a laser seeker configured to be located in the receiver aircraft (12) to allow the guidance of the probe (13) to contact the coupling (6).

2. Aerial refueling coupling (6), according to claim 1, wherein the illumination means are attached to the inner conical surface (7) of the coupling (6).

3. Aerial refueling coupling (6), according to any preceding claim, wherein it comprises a reflecting layer attached to the inner conical surface (7) and located in the area in which the illumination means impinge.

4. Aerial refueling coupling (6), according to any preceding claim, wherein the coupling (6) further comprises:
- a controller (4), configured to be connected to the illumination means for turning it on/off,
- a power supply, configured to be connected to the controller (4) for providing power to it (4).

5. Aerial refueling coupling (6), according to claim 4, wherein the power supply comprises an air turbine (1) located in the coupling (6).

6. Aerial refueling coupling (6), according to any preceding claim 4 to 5, wherein it further comprises a battery (2) configured to be connected to the controller (4).

7. Aerial refueling coupling (6), according to any preceding claim, wherein the illumination means are a laser illuminator (5) or an infrared light or a radar or radio waves.

8. Aerial refueling coupling (6), according to claim 7, wherein it comprises at least two laser illuminators (5) attached to the coupling (6) and configured for pointing to the inner conical surface (7) of the coupling (6).

9. Tanker aircraft **characterized in that** it comprises an aerial refueling coupling (6) according to any preceding claim 1 to 8.

10. Automatically guided aerial refueling system, comprising:
- a laser seeker arranged to be attached to receiver aircraft (12) comprising a probe (13), and
- a coupling (6) arranged to be attached to a hose (11) of a tanker aircraft (10) and comprising an inner conical surface (7) configured for receiving the probe (13) of the receiver aircraft (12) for refueling said receiver aircraft (12),
the system being **characterized in that** the coupling (6) comprises illumination means attached to the coupling (6) and configured for pointing to the inner conical surface (7) of the coupling (6) for illuminating said inner surface (7) as a target for the laser seeker to allow the guidance of the probe (13) to contact the coupling (6).

11. Method for automatically guiding a probe (13) to a coupling (6) in a hose (11) and drogue refueling operation, the coupling (6) arranged to be attached to a hose (11) of a tanker aircraft (10) and comprising an inner conical surface (7) configured for receiving the probe (13) of the receiver aircraft (12), the method **characterized in that** it comprises the steps of:
- providing an illumination means attached to the coupling (6),
- providing a laser seeker in the receiver aircraft (12), and
- pointing the illumination means towards the inner conical surface (7) of the coupling (6) for illuminating said inner conical surface (7) as a target for the laser seeker of the receiver aircraft (12) to allow the guidance of the probe (13) to contact the coupling (6).

12. Method for automatically guiding a probe (13) to a coupling (6) in a hose (11) and drogue refueling operation, according to claim 11, wherein the coupling (6) further comprises a controller (4) configured to be connected to the illumination means and a power supply configured to be connected to the controller (4) for providing power to it (4), the method further comprising the steps of:
- deploying the hose (11),
- activating the power supply,
- providing energy to the controller (4) by the power supply, and
- turning on the illumination means by the controller (4).

13. Method for automatically guiding a probe (13) to a coupling (6) in a hose (11) and drogue refueling operation, according to claim 12, wherein the power supply comprises an air turbine (1) located in the coupling (6) such that it is activated when the coupling (6) starts flying by the impinging air flow.
